Europäisches Patentamt

European Patent Office

Office européen des brevets

(19)

(11) **EP 0 852 963 B1**

(12) **FASCICULE DE BREVET EUROPEEN**

(45) Date de publication et mention
de la délivrance du brevet:
**30.11.2005 Bulletin 2005/48**

(51) Int Cl.⁷: **B01D 45/12**, B01J 8/00,
B04C 7/00, C10G 11/18

(21) Numéro de dépôt: **98400021.6**

(22) Date de dépôt: **07.01.1998**

(54) **Séparateur à enroulement direct de particules d'un mélange gazeux et son utilisation en craquage thermique ou catalytique en lit fluidisé**

Abscheider für das unmittelbare Ausschleudern der Partikel aus einer gasförmigen Mischung in einer thermischen Cracker- oder FCC-Anlage

Separator for the direct centrifuge of the particles of a gaseous mixture and its use in a thermal cracker or FCC unit

(84) Etats contractants désignés:
**AT BE CH DE DK ES FI FR GB GR IE IT LI LU MC NL PT SE**

(30) Priorité: **13.01.1997 FR 9700327**

(43) Date de publication de la demande:
**15.07.1998 Bulletin 1998/29**

(73) Titulaires:
• **Institut Français du Pétrole**
**92500 Rueil Malmaison (FR)**
• **TotalFinaElf France**
**92538 Levallois Perret Cédex (FR)**

(72) Inventeurs:
• **Gauthier, Thierry**
**69230 Saint Genis Laval (FR)**
• **Leroy, Patrick**
**69006 Lyon (FR)**

• **Gille, Damien**
**38200 Vienne (FR)**
• **Del Pozo, Mariano**
**76600 Le Havre (FR)**
• **Patureaux, Thierry**
**76290 Fontaine La Mallet (FR)**

(56) Documents cités:
EP-A- 0 332 277            WO-A-85/04117
WO-A-91/03527            WO-A1-97/29324
WO-A1-97/43032            FR-A- 1 110 117
US-A- 4 708 092            US-A- 4 721 561
US-A- 4 946 656

• QUINN G P ET AL: "POST-RISER QUENCH IMPROVES FCC YIELDS, PROFITABILITY" OIL AND GAS JOURNAL, vol. 94, no. 3, 15 janvier 1996, pages 33-37, XP000555317

## Description

La présente invention concerne au moins un séparateur rapide à enroulement direct permettant de séparer un solide particulaire d'un gaz et son utilisation notamment en craquage catalytique en lit fluidisé. Il peut aussi être utilisé dans un appareil de craquage thermique en présence de particules sensiblement inertes avec ou sans vapeur d'eau.

Dans l'industrie pétrolière, et plus précisément dans les procédés de conversion de charge hydrocarbonée en lit circulant, en présence d'un solide divisé à action catalytique ou non catalytique, la charge est mise au contact des particules de solide divisé dans un réacteur sensiblement vertical, la phase gazeuse et les solides sortant à la même extrémité, soit au sommet du réacteur si l'écoulement s'effectue globalement vers le haut (le réacteur est alors communément appelé riser) soit à la base de celui-ci lorsque l'écoulement s'effectue globalement vers le bas (le réacteur est alors communément appelé droppeur). A la sortie du réacteur, il faut séparer les produits de la réaction des particules catalytiques ou non ; les produits de la réaction sont entraînés vers une séparation secondaire et les particules solides sont recyclées à l'entrée du réacteur après avoir, dans certains procédés, subi une régénération permettant de redonner aux particules des propriétés (teneur en coke, activité par exemple) adéquates pour la réaction.

La présente invention concerne un dispositif comportant un équipement qui permet la séparation rapide des produits gazeux et du solide à la sortie du réacteur, ce qui est particulièrement adapté à certains procédés de conversion tels que le craquage thermique ou le craquage catalytique de charges hydrocarbonées caractérisés par le fait que la température en sortie du réacteur est en général suffisamment élevée pour permettre à des réactions secondaires de dégradation des produits d'avoir lieu.

Ainsi, il peut être avantageux d'utiliser des cyclones directement connectés au réacteur plutôt que de se contenter d'effectuer une séparation inertielle grossière dans un grand volume. Des exemples de procédés de conversion de coupes hydrocarbonées avec séparation rapide sont donnés dans le brevet de Ross et al. (US-A-4 946 656) où la séparation est effectuée dans un cyclone à rebours. L'utilisation des cyclones à rebours permet d'obtenir des efficacités de séparation satisfaisantes. Néanmoins, le volume des cyclones à rebours est important puisqu'il est fonction du diamètre de l'équipement Dc exprimé en m, que l'on peut évaluer approximativement (à 10 % près) en fonction du débit de gaz Qg exprimé en m³/s·par

$$Dc = 0,63\sqrt{Qg}$$

Le volume du cyclone est en général calculable en fonction du diamètre du cyclone. En utilisant un cyclone des plus compact, on pourrait sans doute arriver à un volume

$$Vc = 0,625\pi\ Dc^3$$

Le temps de séjour ts le plus court que l'on peut atteindre dans un cyclone à rebours est donc égal à :

$$ts = Vc/Qg = 0,8Dc$$

Pour un cyclone de 1,3 m de diamètre, communément rencontré sur les unités industrielles de conversion des hydrocarbures, on arrive à un temps de séjour moyen des hydrocarbures de 1 s environ, ce qui est trop long pour éviter des réactions parasites de recombinaison.

Un autre inconvénient des cyclones est leur encombrement important qui implique de les implanter dans des réacteurs de très grande dimension.

D'autres systèmes sont également envisageables. Ainsi Percevauft (brevet FR-1-110-117) décrit un système original de séparation à positionner au sommet d'un conduit. Son système consiste à positionner de part et d'autres du conduit deux chambres de séparation en connexion avec le conduit par une volute qui initient une mise en rotation de l'écoulement dans le plan vertical. Le gaz est soutiré au milieu des chambres par un conduit pénétrant verticalement dans ces chambres à leur sommet et s'ouvrant dans la chambre de séparation par une ouverture sensiblement horizontale. Ce dispositif de séparation peut présenter un volume plus faible que les cyclones à rebours. Il est probablement bien adapté à la séparation d'effluents faiblement chargés en poussières mais sans doute pas à la séparation d'effluents très chargés en particules tels que ceux rencontrés dans le procédé de craquage catalytique. En effet, les conduits d'évacuation des gaz pénétrant verticalement dans les chambres de séparation forment un obstacle à l'écoulement de la suspension gaz-solide lorsque celle-ci passe du conduit aux chambres de séparation. Cela n'est sans doute pas gênant si les particules sont présentes en faibles quantités (typiquement lorsque le débit massique de particules n'excède pas 0,5 fois le débit massique de gaz). Au-delà, les particules forment une couche dense et épaisse sur la partie supérieure de la chambre de séparation et tout obstacle, tel que les conduits pénétrant l'évacuation des gaz, favorisent le ré-entraînement des particules et provoque donc une baisse d'efficacité de la séparation. Par ailleurs, dans ce système, le conduit d'alimentation débouche sans transition dans les chambres de séparation, ce qui provoque une décélération et non une accélération. Cela permet sans doute de séparer les grosses particules possédant une inertie suffisante mais pas les fines particules qui ont tendance à suivre les courants gazeux. Enfin, le fait de diminuer les vitesses implique une augmentation du volume de séparation, d'où une augmentation à la fois du temps de séjour des gaz et de l'encombrement.

Van den Akker et Hegidius (EP-0332 277 A2) proposent un système de séparation dans lequel les conduits d'évacuation des gaz sont positionnés horizontalement, le gaz entrant dans le séparateur tournant maintenant autour de l'axe des conduits d'évacuation des gaz. Néanmoins, les auteurs précisent que les chambres de séparation communiquent entre elles. De ce fait, il n'est pas possible d'établir un écoulement uniformément mis en forme avant la mise en rotation de l'écoulement. De plus, le gaz peut recirculer dans le séparateur, c'est-à-dire effectuer une rotation complète et revenir dans la zone d'entrée au contact avec du gaz directement issu du conduit d'entrée. Cela induit donc un gradient de vitesse tangentielle important au début de la mise en rotation des gaz dans les chambres de séparation, la vitesse du gaz étant plus élevée près des parois des chambres de séparation et de l'axe du conduit d'entrée. Il est donc délicat d'accélérer uniformément le gaz et les particules entrant dans la zone de séparation. De plus, la recirculation dans la chambre de séparation provoque une augmentation du rétromélange du gaz dans le séparateur et peut donc induire des baisses de sélectivité dans le cas de réactions très rapides. Par ailleurs, la recirculation de gaz augmente sensiblement la perte de charge (ou différence de pression) entre l'entrée et les conduits d'évacuation des gaz.

L'art antérieur est aussi décrit dans les brevets suivants :

- le brevet US-A-4 721 561 enseigne un séparateur gaz-particules à deux zones et la nécessité d'avoir deux ouvertures, l'une pour le gaz et le solide préséparé vers le bas, l'autre pour remonter le gaz.
- les brevets WO 95/04117 et US-A-4 708 092 décrivent un séparateur à pression négative dans un lit fluidisé avec une entrée et une sortie dans le même réacteur. Son fonctionnement est donc très différent de celui selon l'invention (séparateur à pression positive) puisque la pression du séparateur est inférieure à celle de la phase diluée de l'enceinte qui le contient.
- enfin, le brevet WO 91/03527 suggère un séparateur centrifuge balistique en forme de crosse, dans lequel les solides sont évacués sans conduit dans la phase diluée d'un réacteur.

Tous ces brevets présentent l'inconvénient d'une recirculation du gaz dans le séparateur, comme décrit dans le brevet EP-A-0 332 277.

La présente invention permet d'éviter ces inconvénients, grâce à un séparateur compact sans recirculation interne du gaz, tout en permettant une séparation très rapide des effluents, en créant une perte de charge (ou différence de pression) très faible et en maintenant une efficacité de séparation des particules supérieure à 80 %. En effet, l'objet principal de l'invention n'est pas d'obtenir des efficacités de séparation des particules très élevées, c'est-à-dire supérieures à 99,9 % comme on peut l'obtenir avec des séparateurs cycloniques optimisés. Il s'agit simplement de retirer l'essentiel des particules afin de pouvoir diminuer fortement les réactions catalytiques (dont l'avancement dépend de la quantité de solides en contact avec le gaz) ou les réactions thermiques par abaissement de la température à la sortie du séparateur (en injectant par exemple un liquide vaporisable), le refroidissement de l'effluent gazeux étant d'autant plus aisé qu'il contiendra moins de particules. Une séparation plus poussée peut être effectuée en aval du séparateur objet de l'invention dans un séparateur plus performant en terme d'efficacité de collecte des particules mais exposant le gaz à des temps de séjour plus grands tel qu'un train de cyclones, l'essentiel du gaz ne pouvant alors plus réagir (moins de particules et/ou une température moins élevée).

On a donc constaté qu'en effectuant une pré-séparation des particules des effluents, on obtenait de très bons résultats en termes de sélectivité.

Plus précisément, la présente invention concerne un dispositif de conversion en lit entraîné d'une charge comportant une enceinte réactionnelle R de forme allongée dans laquelle la dite conversion est effectuée dans des conditions appropriées, comprenant à proximité d'une première extrémité, d'amont en aval dans le sens de circulation de la charge au moins un moyen d'introduction d'au moins un fluide d'entraînement, au moins un moyen d'introduction d'au moins un solide divisé en particules, au moins un moyen d'introduction de ladite charge, ledit dispositif comprenant à proximité d'une deuxième extrémité de ladite enceinte au moins une chambre, reliée à ladite enceinte, de séparation des fluides et des particules issus de l'enceinte R et constitués essentiellement des produits de conversion de ladite charge et des particules solides.

De manière détaillée, la chambre 2 ou dispositif de séparation primaire de particules d'un mélange gazeux en comprenant, comporte une entrée du mélange raccordée à un réacteur R allongé, de préférence de forme sensiblement cylindrique, délivrant ledit mélange, une première sortie 4 délivrant un effluent gazeux résultant de la séparation contenant une quantité mineure de particules et une deuxième sortie 9 délivrant une quantité majeure de particules, la chambre de séparation 2 étant caractérisée en ce qu'elle comporte en combinaison :

- une zone de transition 1 raccordée à ladite entrée et adaptée à une mise en forme rectangulaire ou carrée de la section de passage du mélange circulant du réacteur vers une zone 3 d'enroulement définie ci-dessous ;
- la zone 3 d'enroulement de l'écoulement autour d'une zone centrale 7, cette zone d'enroulement 3 étant connectée à la zone de transition et adaptée à la mise en rotation dans un plan vertical du mélange suivant un angle inférieur à 360 degrés, comprenant d'une part deux parois 6 sensiblement verticales, entre lesquelles s'effectue ladite mise en rotation, et d'autre part une paroi externe 30 définissant l'enroulement vers la zone centrale 7 dudit mélange suivant un angle compris entre 70 et 225 degrés ; et une paroi interne appelée déflecteur 10 délimitant par son autre face la zone centrale 7, raccordée tangentiellement à la zone de transition et s'enroulant sensiblement coaxialement avec la paroi externe suivant un angle de 30 degrés au moins et d'au plus l'angle d'enroulement selon la paroi externe plus 90 degrés ce déflecteur 10 empêchant sur cet angle la recirculation des gaz du mélange entre la zone d'enroulement 3 et la zone centrale 7;

- la première sortie 4 délivrant l'effluent gazeux étant constituée d'un tube dont l'axe central est sensiblement confondu avec celui du déflecteur 10 et dont l'entrée 5 est un orifice percé sur l'une des parois 6 verticales de la zone d'enroulement, ou de deux tubes, de préférence non pénétrants, dont chaque entrée est un orifice percé sur chacune desdites parois; ladite première sortie étant sensiblement coaxiale à la zone d'enroulement de façon à ce que le raccordement de ladite sortie et du déflecteur soit réalisé sensiblement tangentiellement ;

- la deuxième sortie 9 comportant une première paroi 31 raccordée à la paroi externe 30 de la zone d'enroulement et une deuxième paroi 32 raccordée à la zone de transition 1 ou au réacteur. Le séparateur comporte en général des faces latérales 6 depuis la zone d'enroulement jusqu'à la sortie des particules qui sont en général planes, sensiblement verticales, et de préférence parallèles entre elles. La zone de transition qui est une zone de mise en forme et/ou éventuellement d'accélération du mélange de particules et d'effluent entre la partie supérieure du réacteur et le séparateur a les fonctions suivantes :

  - elle permet de modifier la forme de la section de passage qui va passer d'une section sensiblement circulaire dans le réacteur à une section sensiblement rectangulaire ou carrée à l'entrée de la zone d'enroulement du séparateur. Cette section rectangulaire peut posséder un rapport entre le plus grand et le plus petit côté de 1 à 3, le plus petit côté étant généralement celui qui s'entoure autour de la sortie des gaz.

  - elle peut permettre d'accélérer l'écoulement à la vitesse optimale de séparation, grâce à une diminution progressive de la section de passage dans le séparateur. On a constaté que la section de sortie ou, dans le cas où il y a plusieurs séparateurs, la somme des sections de sortie de la zone de transition de chacun des séparateurs pouvait être comprise entre 0,5 et une fois la section de passage du réacteur. Dans ces conditions, la vitesse dans la section de passage rectangulaire est généralement comprise entre 10 et 30 m/s, préférentiellement 15 à à 25 m/s, alors qu'elle est par exemple de 10 à 25 m/s dans la section de passage cylindrique du réacteur. Sa longueur peut être comprise entre 0,1 et 10 fois le diamètre du réacteur et préférentiellement entre 0,5 et 3 fois le diamètre du réacteur.

- Selon une variante où plusieurs séparateurs sont disposés en parallèle à la sortie du réacteur, leurs parois externes n'étant pas sécantes (présence ou absence de point de tangence), la zone de transition peut comporter selon son axe au moins une paroi définissant des secteurs angulaires, de longueur au plus égale à celle de la zone de transition qui est le prolongement des parois externes des zones d'enroulement, en particulier lorsque ces parois de forme semi-circulaire sont tangentes en un point situé sur le plan P passant par les axes des zones d'enroulement des déflecteurs et des sorties de gaz.

Lorsque ces parois externes ne sont ni tangentielles ni sécantes, on peut interposer une paroi en forme de cône ou de coin, par exemple triangulaire, situé sensiblement dans leur prolongement et faisant office de déflecteur du flux. Ces parois ou coins se prolongeant en dessous dudit plan P évitent la communication entre les entrées des chambres de séparation et permettent de maintenir l'écoulement accéléré entre la zone de transition et la zone d'enroulement, tout en contribuant à la mise en forme de l'écoulement à l'entrée de la zone d'enroulement, ce qui est très avantageux. La zone d'accélération peut être horizontale ou verticale selon la forme du séparateur et selon le type de réacteur ascendant ou descendant.

La zone d'enroulement du mélange de particules et d'effluents s'articule en général autour du déflecteur de forme concave. Les particules migrent à la paroi sous l'effet de la force centrifuge. Elles sont véhiculées dans cette zone d'enroulement du séparateur, dont les deux autres parois, opposées l'une à l'autre sont sensiblement verticales.

L'enroulement a de préférence un axe de rotation sensiblement confondu à l'axe des tubes de sortie de l'effluent.

L'enroulement de la paroi interne est habituellement tangent à la paroi de la zone de mise en forme. La vitesse superficielle dans l'enroulement reste sensiblement la même que celle obtenue à la sortie de la zone de mise en forme.

Selon un premier mode de réalisation s'appliquant à un réacteur ascendant ou descendant, la zone de transition peut être horizontale, la paroi 30 externe de la zone d'enroulement peut s'enrouler autour d'un angle de 70 à 135 degrés et le déflecteur 10 autour d'un angle de 30 à 180 degrés.

Selon un deuxième mode de réalisation, où le réacteur est ascendant, la zone de transition peut être verticale, la paroi 30 externe de la zone d'enroulement peut s'enrouler autour d'un angle de 160 à 225 degrés et le déflecteur 10 autour d'un angle de 135 à 270 degrés.

Selon un troisième mode de réalisation où le réacteur est descendant, la zone de transition peut être verticale, la paroi externe 30 de la zone d'enroulement peut s'enrouler autour d'un angle de 70 à 90 degrés et le déflecteur de 30 à 180 degrés.

Il est avantageux que les deux parois de la zone d'enroulement sensiblement verticales soient sensiblement parallèles.

La sortie des effluents qui comportent en général, outre des produits gazeux mais aussi moins de 20 % des particules entrantes, peut être constituée d'un tube dont l'entrée est un orifice percé sur l'une des parois verticales du séparateur, ou de deux tubes dont chaque entrée est un orifice percé sur chacune des parois verticales. De préférence, l'axe du tube est sensiblement compris dans un plan horizontal.

Lorsque le séparateur comprend deux tubes, ceux-ci peuvent éventuellement être réunis en un seul en aval du séparateur par ajout de coudes et de jonctions de tuyauteries. La vitesse superficielle des effluents au niveau de l'entrée des tubes de sortie est en général comprise entre 0,5 et 2 fois la vitesse du gaz dans l'entrée de la zone d'enroulement dans le séparateur et préférentiellement 0,75 à 1,25 fois cette vitesse. En d'autres termes, la somme des sections des premières sorties des effluents est comprise entre 0,5 et deux fois la section de passage du réacteur.

L'ouverture de sortie des solides entre le séparateur et le conduit d'évacuation des solides est disposée généralement selon un axe d'angle compris entre 0 et 45 degrés par rapport à la verticale. Elle peut être tangente à l'enroulement.

La séparation primaire selon l'invention présente les avantages suivants par rapport à ceux de l'art antérieur :

- étant de volume faible, il est plus compact. Le temps de séjour des effluents est donc très court, de l'ordre du tiers au dixième du temps de séjour dans un cyclone classique, ce qui évite les réactions de recombinaison et de surcraquage.

Il présente de plus un faible encombrement stérique, ce qui permet de limiter les modifications en cas de reconstruction (revamping).

- L'absence de recirculation du gaz dans le séparateur réduit sensiblement la perte de charge entre l'entrée du séparateur et la sortie des gaz.

Malgré sa compacité et sa petite taille, on peut obtenir une efficacité de séparation supérieure à 80 % par exemple.

L'invention concerne aussi l'utilisation d'au moins un dispositif de séparation primaire selon l'invention dans un appareil de craquage thermique d'un mélange d'hydrocarbures en présence de particules inertes et en présence ou non de vapeur d'eau.

Elle concerne enfin l'utilisation de ce même dispositif de séparation dans un appareil de craquage catalytique d'une charge d'hydrocarbures.

Le réacteur tubulaire dans lequel s'effectue la réaction de craquage de la charge en lit fluidisé, en présence du catalyseur, peut être soit extérieur, soit intérieur à l'enceinte de stripage dans laquelle s'effectue la séparation ultime des effluents du catalyseur.

La sortie des effluents gazeux du séparateur primaire selon l'invention est habituellement connectée à au moins un séparateur secondaire tel qu'un cyclone, qui permet de récupérer d'une part le catalyseur restant, en vue de le stripper et d'autre part des effluents hydrocarbonés sensiblement exempts de catalyseur (en général, moins de 0,1 % en poids de catalyseur généralement). Ce séparateur secondaire peut être situé à l'extérieur de l'enceinte de stripage.

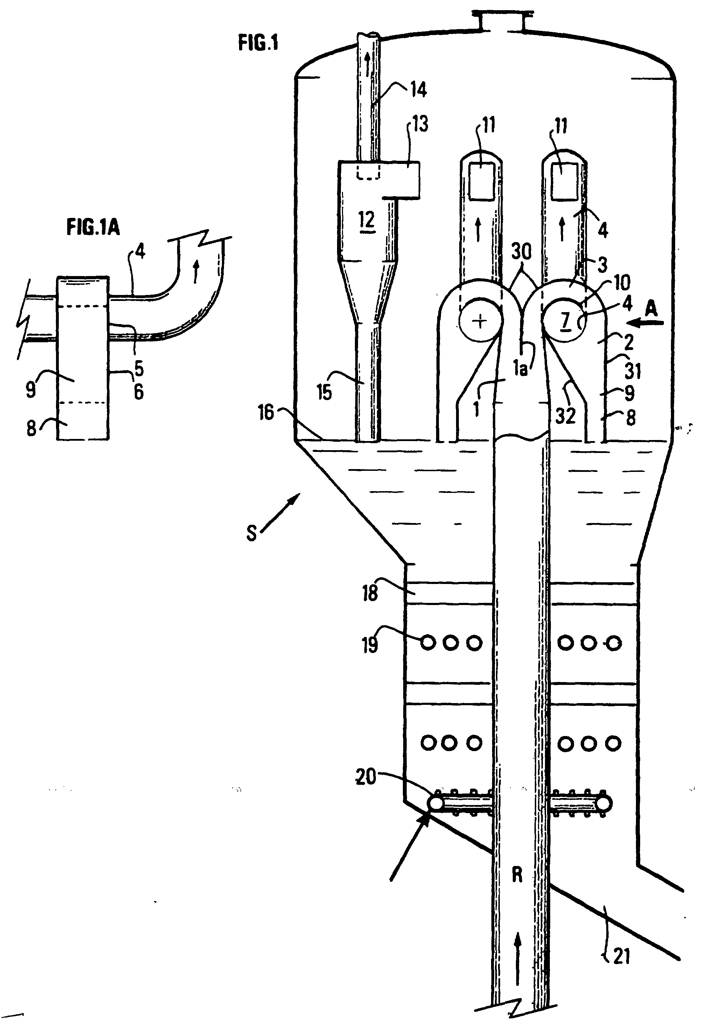

Il peut être situé, selon une autre variante, à l'intérieur de celle-ci. Dans ce cas, le séparateur secondaire peut être situé au voisinage de la sortie du tube connecté à la sortie des effluents gazeux du séparateur primaire selon l'invention, comme le montrera la figure 1 ; il reçoit ainsi les effluents gazeux de la réaction de craquage et les effluents gazeux résultant du stripage du catalyseur, en fond de l'enceinte de stripage ; ou bien il peut être connecté directement à la sortie d'un tube relié à la sortie des effluents gazeux du séparateur primaire selon l'invention. Ledit tube comprend alors habituellement une pluralité de trous qui reçoivent les effluents gazeux résultant du stripage du catalyseur dans la partie inférieure de l'enceinte de stripage, l'ensemble des effluents étant évacués par le cyclone secondaire vers l'extérieur en vue d'un traitement ultérieur.

Dans le cas où l'on souhaite diminuer la température des produits gazeux à la sortie de la zone réactionnelle, il est possible d'injecter un liquide tel que de l'eau ou des mélanges d'hydrocarbures (dont la température d'ébullition est inférieure à la température des produits à la pression d'écoulement des produits) dans le conduit de sortie grâce à des moyens biens connus de l'homme de l'art (pulvérisation de l'hydrocarbure injecté à contre-courant dans ce conduit, ce cas étant cité à titre d'exemple).

Les conduits d'évacuation des solides débouchent dans une enceinte de séparation et de stripage S qui peut également mais non nécessairement contenir les moyens de séparation primaires et/ou secondaires, dont la partie inférieure qui peut être sous ou au-dessus de l'ouverture de ces conduits d'évacuation, contient un inventaire de solides divisés maintenus à l'état dit de fluidisation grâce à au moins une injection appropriée de gaz (tel que l'azote, la vapeur, l'ammoniac, le dioxyde de carbone, le méthane ou l'éthane située sous lesdits conduits et permettant une bonne répartition du gaz sur toute la section de passage. Afin d'améliorer la répartition des solides issus des conduits d'évacuation sur la section de l'enceinte S, il peut être avantageux d'utiliser des moyens tels que par exemple, des rangées de tubes horizontales croisées les unes par rapport aux autres, des plaques perforées placées horizontalement en quinconce les unes par rapport aux autres, positionnés entre l'ouverture de ces conduits et au moins un moyen d'introduction des gaz de fluidisation.

Avant d'être recyclés à l'entrée du réacteur R, les solides peuvent circuler vers des moyens de régénération destinés à leur redonner les propriétés qu'ils avaient avant leur passage dans la zone réactionnelle. Dans le cas où les solides se couvrent de coke lors de leur passage dans la zone réactionnelle R, il peut être ainsi nécessaire de brûler ce coke dans un dispositif de mise en contact avec de l'air, tel que par exemple un ensemble de lits fluidisés, les solides débarrassés de leur coke étant ensuite recyclés à l'entrée de la zone réactionnelle.

Les figures 1 à 3 montrent des exemples non limitatifs de mise en oeuvre du dispositif de séparation primaire utilisables pour séparer produits et solides du dispositif de conversion des hydrocarbures, parmi lesquelles :

- la figure 1 représente une coupe axiale vue de face de deux séparateurs primaires selon l'invention dans une enceinte de stripage d'hydrocarbures d'un dispositif de craquage catalytique et la figure 1A représente une vue de côté d'un de ces séparateurs primaires ;
- la figure 2 montre une vue de face d'un séparateur primaire « quart de tour » ;
- et la figure 3 représente une vue de face d'un séparateur primaire adapté à un réacteur descendant.

La figure 1 décrit un système de séparation primaire mis en oeuvre dans le cas où la zone réactionnelle est un réacteur de craquage catalytique en lit fluidisé de type ascendant. Le système proposé à la figure 1 est particulièrement utilisable dans le cas où la zone réactionnelle R pénètre dans l'enceinte de stripage S, qui est alors, généralement mais non nécessairement, centrée sur R, où débouchent les sorties 8 de solides. La figure représente un système de deux chambres de séparation sensiblement symétriques par rapport à l'axe de la zone réactionnelle et opérant en parallèle, le nombre de chambres pouvant aller généralement de 1 à 8 et préférentiellement dans cette configuration de 2 à 4. Chaque séparateur (figure 1 A) est constitué de deux faces 6 planes sensiblement parallèles à l'axe de la zone réactionnelle R. Leur partie supérieure s'enroule autour d'un déflecteur 10 de forme sensiblement semi-circulaire, dont l'axe central sensiblement perpendiculaire à l'axe de la zone réactionnelle est sensiblement celui de la zone d'enroulement 3. Une zone de transition 1 et d'accélération permet d'effectuer une mise en forme et une accélération du mélange pour chaque séparateur entre l'enceinte réactionnelle R et une zone d'enroulement 3. Cette zone d'enroulement 3 définie par une paroi externe 30 et le déflecteur 10 se connecte à l'extérieur de chaque zone de transition. Les parois externes des zones 3 se prolongent au point de tangence par une paroi la dirigée selon l'axe du réacteur qui évite la communication entre les entrées des chambres et permet le maintien de l'écoulement accéléré. Une rotation de l'enroulement d'environ 180° permet de changer le sens de direction de l'écoulement des particules et de plaquer les particules à la paroi sous l'effet de la force centrifuge induite par l'enroulement 3. L'enroulement s'enroule sur une zone centrale 7, qui est protégée par le déflecteur 10, empêchant toute circulation entre 3 et 7 sur un angle de 135 degrés. Les produits gazeux sont évacués par un conduit 4 d'évacuation non pénétrant dans le séparateur, de forme cylindrique dont l'axe central est sensiblement confondu avec celui du déflecteur et de la zone d'enroulement, et qui est connecté aux faces 6 parallèles du séparateur par deux ouvertures 5 situées respectivement sur chacune des faces 6 du séparateur. Le raccordement du conduit 4 d'évacuation et du déflecteur est réalisé sensiblement selon le même diamètre, à l'épaisseur du conduit près.

Les particules collectées à la partie inférieure de l'enroulement sont ensuite évacuées dans une sortie 9 de solides et canalisées dans un conduit 8. La sortie 9 est connectée tangentiellement à l'enroulement 3 par sa paroi externe 31, la paroi interne 32 qui contient au moins un segment tangent à l'ouverture 5 du conduit de sortie des produits 4 se raccordant à la zone de transition. Le conduit d'évacuation 8 introduit les particules catalytiques dans un lit fluidisé dense 16 de l'enceinte de stripage qui est mis en mouvement par un anneau de fluidisation 20. Celui-ci délivre un courant gazeux de vapeur d'eau par exemple nécessaire au stripage des hydrocarbures. Ce conduit 8 débouche à proximité du niveau du lit dense à plus ou moins 1 m). Des rangées 18,19 horizontales de tubes croisées les unes par rapport aux autres permettent d'améliorer la répartition des particules issues des conduits 8 et par conséquent leur stripage. Les particules catalytiques stripées sont envoyées par une ligne 21 raccordée à l'extrémité inférieure de l'enceinte dans une enceinte de régénération non représentée sur la figure 1. L'effluent gazeux contenant encore 10 à 20 % de particules est introduit par une ouverture 11 prévue sur la ligne 4 à l'entrée 13 d'un cyclone de séparation 12 permettant de récupérer sensiblement l'intégralité des particules par une jambe 15. Cette entrée 13 récupère par ailleurs les effluents résultant du stripage.

Les effluents gazeux de craquage et de stripage sont évacués du cyclone par une ligne 14 conduisant vers des unités de traitement aval non représentées.

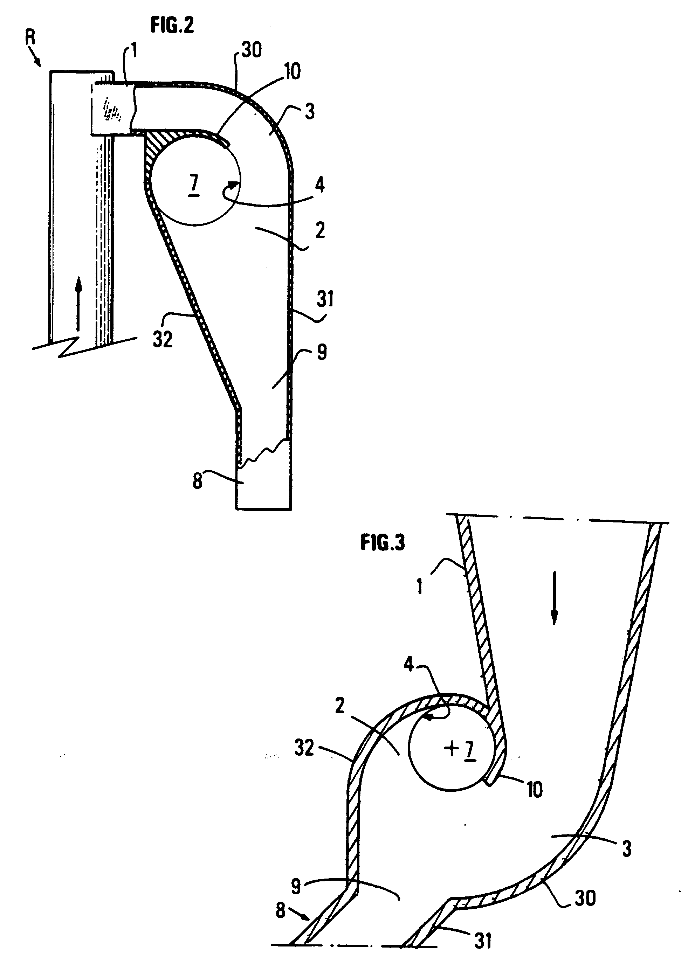

La figure 2 décrit un système de séparation primaire objet de la présente invention mis en oeuvre dans le cas où la zone réactionnelle est un réacteur de type ascendant. Le système proposé à la figure 2 est particulièrement utilisable dans le cas où la zone réactionnelle R ne pénètre pas dans l'enceinte de stripage S. On peut alors positionner la zone de transition 1 sensiblement à l'horizontale, la longueur de la zone de transition 1 étant alors soit suffisamment longue pour que le séparateur soit placé à l'intérieur de S, soit suffisamment courte pour que le séparateur soit placé à l'extérieur de S, le conduit 8 se raccordant alors à la paroi de l'enceinte S. La figure représente un système mono-chambre, le nombre de chambres pouvant aller généralement de 1 à 8 et préférentiellement dans cette configuration de 1 à 3. La zone de transition 1 permet d'effectuer une transition ainsi qu'un changement de direction pour chaque séparateur entre l'enceinte réactionnelle R et l'enroulement 3. L'enroulement 3 se connecte tangentiellement à l'extérieur de chaque zone de transition. Une rotation de l'enroulement d'environ 90° (compris entre 45 et 135°) permet de changer le sens de direction de l'écoulement des particules et de plaquer les particules à la paroi sous l'effet de la force centrifuge induite par l'enroulement 3. L'enroulement s'enroule sur la zone centrale 7, qui est protégée par un déflecteur 10, empêchant toute circulation entre l'enroulement 3 et la zone centrale 7 pendant au moins 15° sur les 45 à 135° de rotation de l'enroulement 3. Les produits sont évacués par le conduit 4 d'évacuation des produits qui est sensiblement coaxial au déflecteur et qui est connecté aux faces parallèles du séparateur par deux ouvertures situées respectivement sur chacune des faces 6 du séparateur.

Les particules collectées sont ensuite évacuées dans la sortie 9 vers le conduit d'évacuation 8, la sortie 9 étant connectée tangentiellement à l'enroulement 3 pour sa face externe 31, la face interne contenant au moins un segment tangent à l'ouverture 5 du conduit de sortie des produits 4.

La figure 3 décrit un système de séparation primaire objet de la présente invention mis en oeuvre dans le cas où la zone réactionnelle est un réacteur de type descendant. Le système proposé à la figure 3 est utilisable dans le cas où la zone réactionnelle R ne pénètre pas dans l'enceinte S ou dans le cas contraire. On peut positionner la zone de transition 1 dans le prolongement du réacteur. La figure représente un système mono-chambre, le nombre de chambres pouvant aller généralement de 1 à 8 et préférentiellement dans cette configuration de 1 à 4. La zone de transition 1 permet d'effectuer une transition pour chaque séparateur entre l'enceinte réactionnelle R et l'enroulement 3. L'enroulement 3 se connecte tangentiellement à l'extérieur de la zone de transition. Une rotation de l'enroulement d'environ 90° permet de changer le sens de direction de l'écoulement des particules et de plaquer les particules à la paroi sous l'effet de la force centrifuge induite par l'enroulement 3. Dans ce cas particulier, l'enroulement se termine nécessairement lorsque la tangente à l'enroulement rencontre l'horizontale. L'enroulement s'enroule sur la zone centrale 7, qui est protégée par un déflecteur 10, empêchant toute circulation entre l'enroulement 3 et la zone centrale 7 sur un angle d'au moins 15° par rapport à l'angle de 90° de rotation de l'enroulement 3. Les produits sont évacués par le conduit 4 d'évacuation des produits connectés aux faces parallèles du séparateur par deux ouvertures 5 situées respectivement sur chacune des faces 6 du séparateur. Ce conduit 4 est sensiblement coaxial au déflecteur.

Les particules collectées sont ensuite évacuées vers le bas dans la zone de sortie 9 vers la canalisation de sortie des solides 8, la sortie 9 étant connectée à l'enroulement 3 pour sa face externe, la face interne pouvant former un enroulement compris entre les deux faces parallèles du séparateur se raccordant tangentiellement par au moins un segment à l'ouverture 5 des conduits d'évacuation des produits 4. Le tube d'évacuation des solides peut être incliné à 45° au maximum par rapport à la verticale, ce qui permet éventuellement de positionner le séparateur à l'extérieur de l'enceinte de stripage S dans le cas où la zone réactionnelle R est externe à l'enceinte S.

La présente invention permet d'obtenir une séparation satisfaisante lorsque la vitesse des fluides gazeux à la sortie de la zone de transition et dans la zone d'enroulement est comprise entre 10 et 30 m/s, et préférentiellement de 15 à 25 m/s. La charge en solide, définie comme le rapport massique du débit de solide sur le débit des fluides est préférentiellement compris entre 2 et 100 en fonction des propriétés physiques des particules, tant que ce rapport permet d'obtenir des conditions d'écoulement stable dans la zone réactionnelle R. L'ouverture 5 d'évacuation des gaz permet d'obtenir un bon fonctionnement lorsque la vitesse des gaz dans ces ouvertures est comprise entre 50 % et 150 % de la vitesse des gaz à l'entrée de la zone de séparation. Les conduits 8 d'évacuation des solides doivent permettre évacuation de tout le solide circulant dans chaque séparateur primaire en respectant un flux massique de matière solide par unité de surface supérieur à 100 kg/s/m$^2$, préférentiellement compris dans le domaine 300-800 kg/s/m$^2$.

### Exemple

Des essais ont été conduits sur un dispositif selon l'invention utilisant un séparateur à enroulement direct tel que celui décrit sur la figure 1. Le séparateur était constitué de deux chambres à enroulement direct. Le diamètre de rotation de l'enroulement externe était de 95 mm et le diamètre de l'enroulement interne servant de déflecteur était de 50 mm. Le conduit d'évacuation des gaz était constitué de deux tubes non pénétrants centrés sur l'axe de l'enroulement et s'appuyant coaxialement sur le déflecteur qui s'enroule suivant un angle de 180°. Le séparateur était alimenté par un tube de transport vertical de 123 mm de diamètre pouvant transporter jusqu'à 12 t/h de catalyseur issu d'un lit fluidisé. Le catalyseur séparé dans le séparateur était réinjecté dans le lit fluidisé afin d'opérer en continu. Ce système a été opéré dans les conditions ambiantes de température et de pression de sorte que la densité du gaz dans le séparateur était de 1,2 kg/m3. Dans ces conditions, on a pu observer que si moins de 5 % du gaz est entraîné avec le solide (cette quantité dépendant de la contre pression exercée sur la sortie des particules par rapport à la sortie gaz), alors la perte de pression entre l'entrée de l'enroulement et la sortie des tubes d'évacuation des gaz est inférieure à 800 Pa lorsque la vitesse dans l'enroulement est de 20 m/s. Des essais conduits à 5m/s de vitesse du gaz dans l'enroulement ont montré que l'efficacité de collecte des particules est, pour un débit de particules de 7 t/h, supérieure à 97 % lorsque la quantité de gaz soutirée avec les particules est comprise entre 2 % et 50 %.

**Revendications**

1. Dispositif de conversion d'une charge en lit entraîné comprenant:

   - un réacteur R de forme allongée, de section sensiblement circulaire et d'axe vertical, comprenant à proximité d'une première extrémité, d'amont en aval dans le sens de circulation de la charge, au moins un moyen d'introduction d'un fluide d'entraînement, au moins un moyen d'introduction d'un solide divisé en particules, et au moins un moyen d'introduction d'une charge d'hydrocarbures,

   - à proximité d'une deuxième extrémité du réacteur R, au moins une chambre de séparation (2) d'un mélange gaz / particules solides issu du réacteur R, cette chambre comportant en combinaison:

     - une entrée du mélange raccordée au réacteur R délivrant ledit mélange, une première sortie (4) délivrant un effluent gazeux résultant de la séparation contenant une quantité mineure de particules et une deuxième sortie (9) délivrant une quantité majeure de particules,

     - une zone de transition (1) raccordée à ladite entrée et adaptée à une mise en forme rectangulaire ou carrée de la section de passage du mélange circulant du réacteur vers une zone (3) d'enroulement définie ci-dessous ;

     - la zone (3) d'enroulement de l'écoulement autour d'une zone centrale (7), ladite zone d'enroulement (3) étant connectée à la zone de transition (1) et adaptée à la mise en rotation dans un plan vertical du mélange suivant un angle inférieur à 360 degrés, comprenant:

   - ■ deux parois (6) sensiblement verticales, entre lesquelles s'effectue ladite mise en rotation,
   - ■ une paroi externe (30) définissant l'enroulement vers la zone centrale (7) dudit mélange suivant un angle compris entre 70 et 225 degrés,
   - ■ une paroi interne appelée déflecteur (10) délimitant par son autre face la zone centrale (7), raccordée tangentiellement à la zone de transition (1) et s'enroulant sensiblement coaxialement avec la paroi externe suivant un angle de 30 degrés au moins et d'au plus l'angle d'enroulement selon la paroi externe plus 90 degrés, ledit déflecteur (10) empêchant sur cet angle la recirculation des gaz du mélange entre la zone d'enroulement (3) et la zone centrale (7);

     - la première sortie (4) délivrant l'effluent gazeux étant constituée d'un tube dont l'axe central est sensiblement confondu avec celui du déflecteur (10) et dont l'entrée (5) est un orifice percé sur l'une des parois (6) verticales de la zone d'enroulement (3), ou de deux tubes dont chaque entrée est un orifice percé sur chacune des dites parois; ladite première sortie étant sensiblement coaxiale à la zone d'enroulement (3) de façon à ce que le raccordement de ladite sortie (4) et du déflecteur (40) soit réalisé sensiblement tangentiellement ;

     - la deuxième sortie (9) comportant une première paroi (31) raccordée à la paroi externe (30) de la zone d'enroulement et une deuxième paroi (32) raccordée à la zone de transition (1) ou au réacteur.

2. Dispositif selon la revendication 1, dans lequel la deuxième sortie (9) présente une ouverture de sortie des solides selon un axe d'angle compris entre 0 et 45 degrés par rapport à la verticale.

3. Dispositif selon l'une des revendications 1 et 2, dans lequel la zone (1) de transition est horizontale, la paroi (30) externe de la zone d'enroulement s'enroule autour d'un angle de 70 à 135 degrés et le déflecteur (10) autour d'un angle de 30 à 180 degrés.

4. Dispositif selon l'une des revendications 1 à 3, dans lequel le réacteur (R) est ascendant, la zone de transition (1) est verticale, la paroi (30) externe de la zone d'enroulement s'enroule autour d'un angle de 160 à 225 degrés et le déflecteur (10) autour d'un angle de 135 à 270 degrés.

5. Dispositif selon la revendication 1, dans lequel le réacteur est descendant, la zone (1) de transition est verticale, la paroi externe (30) de la zone d'enroulement s'enroule autour d'un angle de 70 à 90 degrés et le déflecteur de 30 à 180 degrés.

6. Dispositif selon l'une des revendications 1 à 5, dans lequel les deux parois (6) sensiblement verticales de la zone d'enroulement sont sensiblement parallèles.

7. Dispositif selon l'une des revendications 1 à 6, dans lequel la zone de transition est aussi une zone d'accélération, la section ou la somme des sections de sortie de la zone de transition de chacune des chambres, dans le cas où il y a au moins deux chambres de séparation, est comprise entre 0,5 et une fois la section de passage du réacteur et dans lequel la section ou la somme des sections de première sortie de gaz est comprise entre 0,5 et deux fois la section de passage du réacteur.

8. Dispositif selon l'une des revendications 1, 3, 4, 6 et 7 comportant au moins deux chambres de séparation dont les parois externes ne sont pas sécantes, lesdites chambres étant disposées en parallèle à la sortie du réacteur (R), dans lequel la zone de transition comporte selon son axe au moins une paroi (1a) de longueur au plus égale à celle de la zone de transition, qui est sensiblement le prolongement desdites parois externes (30) des zones d'enroulement.

9. Utilisation d'un dispositif selon l'une des revendications précédentes pour le craquage catalytique en lit fluidisé d'une charge d'hydrocarbures.

10. Utilisation selon la revendication 9, dans lequel le réacteur (R) est ascendant, et dans lequel les particules collectées en partie inférieure de l'enroulement sont évacuées dans la sortie (9) des particules solides, canalisées dans un conduit d'évacuation (8) et introduites dans un lit fluidisé dense (16) d'une enceinte de stripage.

11. Utilisation selon la revendication 10, dans laquelle le réacteur tubulaire est extérieur à une enceinte de stripage des hydrocarbures.

12. Utilisation selon la revendication 11, dans laquelle le dispositif de séparation est à l'extérieur d'une enceinte de stripage.

13. Utilisation selon l'une des revendications 9 à 12, dans laquelle la première sortie (4) du dispositif de séparation est connectée à au moins un séparateur secondaire (12).

14. Utilisation selon la revendication 13, dans laquelle le séparateur secondaire est situé dans une enceinte de stripage.

15. Utilisation selon la revendication 14, dans laquelle le séparateur secondaire (12) est situé au voisinage de la sortie d'un tube connecté à la première sortie (4) délivrant l'effluent gazeux.

16. Utilisation selon la revendication 14, dans laquelle le séparateur secondaire est directement connecté à la sortie d'un tube relié à la première sortie délivrant l'effluent gazeux, ledit tube comprenant une pluralité de trous adaptés à recevoir les effluents gazeux résultant du stripage du catalyseur dans l'enceinte du stripage.

**Patentansprüche**

1. Vorrichtung zur Umwandlung einer Beschickung im Wirbelbett, umfassend:

- einen Reaktor R mit länglicher Form mit im Wesentlichen kreisförmigem Querschnitt und Vertikalachse, umfassend in der Nähe eines ersten Endes von stromaufwärts nach stromabwärts in der Flussrichtung der Beschickung wenigstens ein Mittel zum Einführen eines Fluids zum Mitreißen, wenigstens ein Mittel zum Einführen eines Festkörpers, der in Partikel unterteilt ist, und wenigstens ein Mittel zum Einführen einer Kohlenwasserstoffbeschickung,

- in der Nähe eines zweiten Endes des Reaktors R wenigstens eine Trennkammer (2) von einem Gemisch Gas/ Festpartikel aus dem Reaktor R, wobei diese Kammer in Kombination umfasst:

  - einen Eingang des Gemischs, verbunden mit dem Reaktor R, welcher das Gemisch liefert; wobei ein erster Ausgang (4) einen Gasabstrom liefert, der aus der Trennung resultiert und eine unbedeutende Partikelmenge enthält und ein zweiter Ausgang (9) eine hauptsächliche Partikelmenge liefert,

  - eine Übergangszone (1), die mit dem Eingang verbunden ist und ausgelegt ist für ein rechteckiges oder quadratisches Formen des Durchgangsquerschnitts des Gemischs, das von dem Reaktor zu einer Windungszone (3) zirkuliert, welche unten definiert ist,

- die Windungszone (3) um einen zentralen Bereich (7), wobei die Windungszone (3) mit der Übergangszone (1) verbunden ist und zum Rotieren in einer Vertikalebene des Gemischs gemäß einem Winkel unter 360 Grad ausgelegt ist, umfassend:

  • zwei Wände (6), die im Wesentlichen vertikal zueinander sind und zwischen welchen das Rotieren geschieht,

  • eine Außenwand (30), die das Winden zum Zentralbereich (7) des Gemischs gemäß einem Winkel zwischen 70 und 225 Grad definiert,

  • eine Deflektor (10) genannte Innenwand, die durch ihre Außenseite den Zentralbereich (7) begrenzt, welcher tangential mit der Übergangszone (1) verbunden ist und sich im Wesentlichen koaxial mit der Außenwand gemäß einem Winkel von wenigstens 30 Grad und höchstens dem Windungswinkel gemäß der Außenwand plus 90 Grad windet, wobei der Deflektor (10) auf diesem Winkel die Rückzirkulation der Gase des Gemisches zwischen der Windungszone (3) und dem Zentralbereich (7) verhindert;

- wobei der erste Ausgang (4), welcher den Gasabstrom liefert, aus einem Rohr besteht, dessen Zentralachse im Wesentlichen mit jener des Deflektors (10) ineinandergeflossen ist und dessen Eingang (5) eine Öffnung ist, die über eine der Vertikalwände (6) der Windungszone (3) gebohrt ist, oder zwei Rohren, von denen jeder Eingang eine Öffnung ist, die über jede der Wände gebohrt ist; wobei der erste Ausgang im Wesentlichen koaxial zur Windungszone (3) derart ist, dass die Verbindung des Ausgangs (4) und des Deflektors (10) im Wesentlichen tangential ausgeführt ist;

- wobei der zweite Ausgang (9) eine erste Wand (31) umfasst, die mit der Außenwand (30) der Windungszone verbunden ist, und eine zweite Wand (32), die mit der Übergangszone (1) oder dem Reaktor verbunden ist.

2. Vorrichtung nach Anspruch 1, bei der der zweite Ausgang (9) eine Ausgangsöffnung der Feststoffe gemäß einem Winkel zwischen 0 und 45 Grad im Verhältnis zur Vertikalen aufweist.

3. Vorrichtung nach einem der Ansprüche 1 und 2, bei der die Übergangszone (1) horizontal ist und sich die Außenwand (30) der Windungszone in einem Winkel von 70 bis 135 Grad windet und der Deflektor (10) um einen Winkel von 30 bis 180 Grad.

4. Vorrichtung nach einem der Ansprüche 1 bis 3, bei der der Reaktor (R) aufsteigend ist, die Übergangszone (1) vertikal ist, die Außenwand (30) der Windungszone sich um einen Winkel von 160 bis 225 Grad windet und der Deflektor (10) um einen Winkel von 135 bis 270 Grad.

5. Vorrichtung nach Anspruch 1, bei der der Reaktor absteigend ist, die Übergangszone (1) vertikal ist, die Außenwand (30) der Windungszone sich um einen Winkel von 70 bis 90 Grad windet und der Deflektor von 30 bis 180 Grad.

6. Vorrichtung nach einem der Ansprüche 1 bis 5, bei der die beiden Wände (6), die im Wesentlichen vertikal zur Windungszone sind, im Wesentlichen parallel sind.

7. Vorrichtung nach einem der Ansprüche 1 bis 6, bei der die Übergangszone auch eine Beschleunigungszone ist, der Bereich oder die Summe der Bereiche eines Ausgangs der Übergangszone von jeder der Kammern oder in dem Fall, wo es wenigstens zwei Trennkammern gibt, zwischen 0,5 und einem Mal dem Durchgangs-Querschnitt des Reaktors liegt und in der der Abschnitt oder Summe der Abschnitte eines ersten Gasaustritts zwischen 0,5 und zwei Mal dem Durchgangsquerschnitt des Reaktors ist.

8. Vorrichtung nach einem der Ansprüche 1, 3, 4, 6 und 7, umfassend wenigstens zwei Trennkammern, deren Außenwände nicht Sekanten sind, wobei die Kammern parallel zum Ausgang des Reaktors (R) angeordnet sind, in welchem die Übergangszone gemäß ihrer Achse wenigstens eine Wand (1 a) mit Länge höchstens gleich jener der Übergangszone umfasst, welche im Wesentlichen die Verlängerung der Außenwände (30) der Windungszone ist.

9. Verwendung einer Vorrichtung nach einem der vorhergehenden Ansprüche zum katalytischen Krakken im fluidisierten Bett einer Kohlenwasserstoffbeschickung.

10. Verwendung nach Anspruch 9, bei der der Reaktor (R) aufsteigend ist und in welchem die Partikel im unteren Teil der Windung gesammelt, aus dem Austritt (9) der Festpartikel evakuiert werden, in eine Abzugsleitung (8) kanalisiert werden und in ein dichtes fluidisiertes Bett (16) eines Abstreifraums eingeführt werden.

11. Verwendung nach Anspruch 10, bei der der Röhrenreaktor außerhalb eines Abstreifraums der Kohlenwasserstoffe liegt.

12. Verwendung nach Anspruch 11, bei der die Trennvorrichtung außerhalb eines Abstreifraums ist.

13. Verwendung nach einem der Ansprüche 9 bis 12, bei der der erste Ausgang (4) der Vorrichtung zur Trennung mit wenigstens einem Nebentrenner (12) verbunden ist.

14. Verwendung nach Anspruch 13, bei der der Nebentrenner in einem Abstreifraum gelegen ist.

15. Verwendung nach Anspruch 14, bei der der Nebentrenner (12) in der Nähe des Austritts eines Rohrs gelegen ist, das mit dem ersten Ausgang (4) verbunden ist, welcher den Gasabstrom liefert.

16. Verwendung nach Anspruch 14, bei der der zweite Trenner direkt mit dem Ausgang eines Rohrs verbunden ist, das mit dem ersten Ausgang verbunden ist, welcher den Gasabstrom liefert, wobei das Rohr eine Vielzahl von Löchern umfasst, die ausgelegt sind, die Gasabströme zu empfangen, welche aus dem Abstreifen des Katalysators in den Abstreifraum resultieren.

## Claims

1. An apparatus for converting a feedstock within a circulating bed comprising:

   - a reactor (R) with an elongate form, a substantially circular section and a vertical axis, comprising near to a first end, from upstream to downstream with respect to the feed circulation direction, at least one means for introducing a driving fluid, at least one means for introducing a solid divided into particles, and at least one means for introducing an hydrocarbon feed,
   - near a second end of the reactor (R), at least one separation chamber (2) for separating a gaseous / solid particles mixture issued from the reactor R, the separation chamber comprising in combination:

     - A mixture inlet connected to the reactor (R), delivering said mixture, a first outlet (4) delivering a gaseous effluent resulting from separation, containing a minor quantity of particles, and a second outlet (9) delivering a major portion of the particles,
   - A transition zone (1) connected to said inlet and adapted to form a rectangular or square cross section for passage of the mixture circulating from the reactor to a turning zone (3) defined below;
   - The turning zone (3) for turning the flow around a central zone (7), said turning zone (3) being connected to the transition zone (1) and adapted to rotate the mixture in a vertical plane through an angle which is less than 360°, comprising:

     • two substantially vertical walls (6), between which said rotation occurs;
     • an external wall (30) defining the turn towards the central zone (7) of said mixture through an angle which is in the range 70° to 225°;
     • an internal wall named deflector (10) delimiting by its other side the central zone (7), tangentially connected to the transition zone (1) and turning substantially coaxially with the external wall through an angle of at least 30° and at most the angle through which the external wall turns, plus 90°, said deflector (10) preventing over that angle the recirculation of the gases of the mixture between the turning zone (3) and the central zone (7);

   - the first outlet (4) delivering the gaseous effluent being constituted by a tube substantially coaxial with the deflector (10), with an inlet (5) which is an orifice pierced in one of the vertical walls (6) of the turning zone (3), or by two tubes of which each inlet is an orifice pierced in each of said walls; said first outlet being substantially coaxial with the turning zone (3) such that the connection of said outlet (4) and said deflector (10) is substantially tangential;
   - the second outlet (9) comprising a first wall (31) connected to the external wall (30) of the turning zone and a second wall (32) connected to transition zone (1) or to the reactor.

2. An apparatus according to claim 1, in which the second outlet (9) comprises a solids outlet opening with an axe forming an angle comprised between 0° and 45° with respect to the vertical direction.

3. An apparatus according to one of claims 1 and 2, in which the transition zone (1) is horizontal, the external wall (30) of the turning zone turns through an angle of 70° to 135° and the deflector (10) turns through an angle of 30° to 180°.

4. An apparatus according to one of claims 1 to 3, in which the reactor (R) is a riser reactor, the transition zone (1) is vertical, the external wall (30) of the turning zone turns through an angle of 160° to 225° and the deflector (10) turns through an angle of 135° to 270°.

5. An apparatus according to claim 1, in which the reactor is a dropper reactor, the transition zone (1) is vertical, the external wall (30) of the turning zone turns through an angle of 70° to 90° and the deflector turns through an angle of 30° to 180°.

6. An apparatus according to any one of claims 1 to 5, in which the two substantially vertical walls (6) in the turning zone are substantially parallel.

7. An apparatus according to any one of claims 1 to 6, in which the transition zone is also an acceleration zone, the cross section or the sum of the cross sections of the outlet from the transition zone of each of the chambers, in the case where there are at least two separation chambers, is in the range 0.5 to one time the cross section of the reactor and in which the cross section or the sum of the cross sections of the first gas outlet is in the range 0.5 to two times the cross section of the reactor.

8. An apparatus according to any one of claims 1, 3, 4, 6 and 7, comprising at least two separation chambers in which the external walls do not intersect, said chambers being disposed parallel to the outlet to the reactor (R), in which the transition zone comprises along its axis at least one wall (1a) with a length which is at most equal to that of the transition zone, which is substantially an elongation of said external walls (30) of the turning zones.

9. Use of an apparatus according to anyone of the preceding claims for catalytic cracking an hydrocarbon feed in a fluidised bed.

10. Use according to claim 9, in which the reactor R is a riser reactor, and in which the particles that are collected at the lower part of the turning zone are withdrawn through the outlet (9) for solid particles, driven into a discharge duct (8) and introduced into a dense fluidised bed (16) of a stripping vessel.

11. Use according to claim 10, in which the tube reactor is external to a hydrocarbon stripping vessel.

12. Use according to claim 11, in which the the separation apparatus is external to a stripping vessel.

13. Use according to any one of claims 9 to 12, in which the first outlet (4) from the separation apparatus is connected to at least one secondary separator (12).

14. Use according to claim 13, in which the secondary separator is located in a stripping vessel.

15. Use according to claim 14, in which the secondary separator (12) is located close to the outlet from a tube connected to the first outlet (4) delivering the gaseous effluent.

16. Use according to claim 14, in which the secondary separator is directly connected to the outlet from a tube connected to the first outlet delivering the gaseous effluent, said tube comprising a plurality of holes for receiving gaseous effluents resulting from stripping a catalyst in the stripping vessel.

FIG.1

FIG.1A

**FIG.2**

**FIG.3**